# EUROPEAN PATENT SPECIFICATION

(11) **EP 3 381 676 B1**
(45) Date of publication and mention of the grant of the patent: **11.12.2019**
(21) Application number: 17163872.9
(22) Date of filing: 30.03.2017
(51) Int. Cl.: B65D 5/02, B32B 7/12, B32B 15/20, B32B 27/10, B32B 27/30, B32B 27/32, B32B 29/00, D21H 27/32, D21H 27/10, D21H 27/30, D21H 19/38, B65D 3/08, B65D 3/28

(54) **PAPER LAMINATE**
PAPIERLAMINAT
STRATIFIÉ EN PAPIER

(43) Date of publication of application: 03.10.2018
(73) Proprietor: BillerudKorsnäs AB, 169 27 Solna (SE)
(72) Inventor: Reuterhage, Åke, SE-603 77 Norrköping (SE); Ragnarsson, Micael, SE-660 50 Vålberg (SE)
(74) Representative: Kransell & Wennborg KB

(56) References cited:
- WO-A1-2016/156454
- CN-A- 103 806 326

## Description

### TECHNICAL FIELD

The invention relates to a paper laminate for use in a process of forming a container, in particular a process comprising embossing and/or blow molding.

### BACKGROUND

Figure 2 in EP2942188 shows a machine (100) for forming a container, in which a sheet of a paper-based composite material can be heated by heating means (270), embossed (micro-shaped) between dies in a press (275) and shaped into a tube and longitudinally sealed by ultrasonic welding in an apparatus (115). In another apparatus (120) of the machine (100), the bottom end of the tube is closed and the tube may then be deformed by blow molding (macro-shaping).

WO 2016/156454 relates to a substrate with a stretchable coating and discloses a coated paper material comprising a paper substrate coated with a composition comprising at least one acrylic binder having a Tg of -3 °C or lower and at least one inorganic filler having a BET specific surface area in the range of 1.0 to 30.0 m 2/g, wherein the dry weight ratio of the at least one acrylic binder to the at least one inorganic filler is between 15: 100 and 20:100. According to one embodiment, the material comprises a paper substrate that is a laminate comprising a first (top) and a second(bottom) stretchable paper layer. Between the first and the second paper layer, a polyethylene (PE) layer is provided as an adhesive. The top surface of the first paper layer is covered by a coating layer consisting of a composition comprising an inorganic filler (e.g. calcium carbonate pigment) and an acrylic binder (e.g. styrene-acrylic copolymer). The coating layer is printed such that a printing layer is obtained. In turn, the printing layer is covered by a barrier layer. WO 2016/156454 also discloses coating of a single-layer stretchable paper (100 g/m²) with compositions comprising 100 parts filler and 20 parts styrene/butadiene copolymer binder and concludes that the styrene/butadiene copolymer binders cannot be used for the stretchable coating.

CN 103806326 A discloses a flexible packing container for liquid comprising polyethylene layer, aluminium foil, paper layer(s) with coating, printing-ink and polyethylene layer (or wax layer).

### SUMMARY

The present inventors have realized that the above machine requires that the paper-based composite material that is formed into the container meets specific requirements.

The composite material is normally printed on the side facing outwards in the final container. For the visual appearance, it is important that substantial cracking of the print layer is avoided when the composite material is stretched during embossing (micro-shaping) and/or blow molding (macro-shaping).

During blow molding, which stretches the composite material, the longitudinal ends of the tube must be firmly sealed to each other. The time period between the longitudinal sealing step and the blow molding step is however short, which means that the sealing process must be quick. Accordingly, it is important that the solution to the cracking problem allows for the formation of a firm seal in the short time period that is available.

To meet these requirements, there is provided a laminate comprising a first paper layer having a top side and a bottom side and a second paper layer having a top side and a bottom side, wherein:
- the stretchability according to ISO 1924-3 of the first and the second paper layer is at least 6 % in both the machine direction (MD) and the cross direction (CD);
- an adhesive is provided between the bottom side of the first paper layer and the top side of the second paper layer;
- a pigment layer comprising CaCO₃ pigment and a styrene-butadiene copolymer binder is coated on the top side of the first paper layer;
- a print layer is provided on the pigment layer;
- a top layer comprising 8-30 g/m² polyethylene (PE) is provided on the print layer; and
- a bottom layer comprising 15-80 g/m² PE is provided on the bottom side of the second paper layer.

As shown in the Example below, almost no cracks were observed after macro- and micro-shaping when a print layer on a pigment layer comprising calcium carbonate and a styrene-butadiene binder was covered by a layer of PE. In contrast, substantial cracks were observed when the same print layer provided on the same pigment layer was not covered to the PE layer.

The inventors have also found that the adhesion between PE and the printed pigment layer of calcium carbonate and styrene-butadiene is strong enough to quickly form a firm seal after ultrasonic welding that withstands the blow molding process in long-term production.

### BRIEF DESCRIPTION OF THE DRAWINGS

Fig 1 illustrates two examples of containers that may be formed from the laminate of the present disclosure. The container of figure 1a comprises micro-shaped rounded protrusions that are formed by embossing and have a diameter of 12 mm and a height of 3.6 mm. The container of figure 1b comprises a macro-shaped protrusion (a 3D shape) formed by blow molding.
Figure 2a illustrates the layers of a reference laminate. Figure 2b illustrates the layers of an embodiment of a laminate according to the present disclosure.
Figure 3 shows containers formed by a method according EP2942188 from reference laminates "LAM1" and "LAM4" (see also figure 2a) and laminates according to the present disclosure "LAM2" and "LAM3" (see also figure 2b). The containers of figure 3a have been subjected to blow molding (macro shaping). The containers of figure 3b have been subjected to embossing (micro shaping). Figure 3 also shows the samples that were analyzed by microscopy.
Figure 4a shows a microscopic image of a part of the container shown in figure 3a formed from the reference laminate (LAMi). Figure 4b shows a microscopic image of a part of the container shown in figure 3a formed from the laminate according to the present disclosure (LAM2).
Figure 5a shows a microscopic image of another part of the container shown in figure 3a formed from the reference laminate (LAMi). Figure 5b shows a microscopic image of another part of the container shown in figure 3a formed from the laminate according to the present disclosure (LAM2).
Figure 6a shows a microscopic image of a part of the container shown in figure 3b formed from the reference laminate (LAM4). Figure 6b shows a microscopic image of a part of the container shown in figure 3b formed from the laminate according to the present disclosure (LAM3).

### DETAILED DESCRIPTION

There present disclosure provides a laminate comprising:
a first paper layer having a top side and a bottom side; and
a second paper layer having a top side and a bottom side.

If only one paper layer is used, the stiffness is insufficient.

Preferably, the first paper layer is bleached. In one embodiment, the first and the second paper layer are bleached.

The first and the second paper layer are preferably kraft paper layers, typically formed from softwood pulp.

The stretchability according to ISO 1924-3 of the first and the second layer is at least 6 %, preferably at least 7 %, in both the machine direction (MD) and the cross direction (CD). More preferably, the stretchability is at least 8 % in both MD and CD. An example of a stretchable paper suitable for the first and the second paper layer of the present disclosure is FibreForm® marketed by BillerudKorsnäs AB (Sweden).

The grammage according to ISO 536 of the first paper layer is typically 50-250 g/m², preferably 70-200 g/m², more preferably 80-160 g/m² and most preferably 80-120 g/m².

The grammage according to ISO 536 of the second paper layer is typically 50-250 g/m², preferably 80-210 g/m², more preferably 90-200 g/m² and most preferably 120-170 g/m².

In the laminate of the present disclosure, an adhesive is provided between the bottom side of the first paper layer and the top side of the second paper layer (to adhere the paper layers to each other). The adhesive may for example be a polyethylene (PE) layer, a water-based glue, an organic solvent-based glue or a solvent-free adhesive. When the laminate is PE, it may be provided in an amount of 10-40 g/m², such as 10-35 g/m², such as 15-35 g/m².

Further, a pigment layer comprising calcium carbonate pigment and a binder is coated on the top side of the first paper layer (to form a surface for printing). The coat weight of the pigment layer is typically 8-35 g/m², preferably 10-30 g/m², more preferably 12-28 g/m² and most preferably 14-25 g/m².

The pigment layer may comprise calcium carbonate having a weight median particle size *d₅₀* of less than 1.0 µm, such as less than 0.8 µm. Such relatively fine pigment improves the quality of the print. Since only the top surface of the pigment layer is printed, the pigment layer may comprise two sub-layers, wherein only the upper sub-layer comprises the fine pigments, while the lower sub-layer comprises coarser pigments, which are generally cheaper.

For determining the weight median particle size *d*₅₀ value, a SediGraph 5100 or 5120 device from the company Micromeritics, USA, can be used.

Experiments indicate that during longitudinal sealing by ultrasonic welding, the top layer (discussed below) adheres better to a pigment layer comprising a styrene-butadiene copolymer than to a pigment layer comprising a styrene-acrylic copolymer. Accordingly, the binder is preferably a styrene-butadiene copolymer.

In one embodiment, the calcium carbonate pigment and the binder make up for at least 85 %, such as at least 90 %, of the dry weight of the pigment layer.

In addition to calcium carbonate, the pigment layer may comprise another inorganic material, such as clay.

The dry weight ratio of binder to pigment in the pigment layer is preferably between 10:100 and 17:100, more preferably between 13:100 and 17:100.

Further the pigment layer typically comprises a rheology modifier, such as an alkali swellable emulsion (ASE) or a hydrophobically modified, alkali swellable emulsion (HASE).

The dry weight ratio of rheology modifier to pigment in the pigment layer is preferably between 0.05:100 and 0.50:100, such as between 0.10:100 and 0.30:100.

The pigment layer may also comprise a base, such NaOH, to adjust the pH.

The pigment layer is printed, which means that a print layer is provided on the pigment layer.

On the print layer, there is provided a top layer comprising 8-30 g/m² polyethylene (PE). Preferably, the amount of PE in the top layer is 12-25 g/m², such as 13-20 g/m². Further, a bottom layer comprising 15-80 g/m² PE is provided on the bottom side of the second paper layer. Preferably, the amount of PE in the bottom layer is 15-50 g/m², such as 15-40 g/m², such as 18-35 g/m². During longitudinal sealing, the top layer of one longitudinal end of the laminate sheer is welded to the bottom layer the other longitudinal end of the laminate sheet in the area of overlap.

A barrier layer may be embedded in the bottom layer. For example, the bottom layer may comprise an oxygen barrier sub-layer sandwiched between two PE sub-layers. The oxygen barrier sub-layer may for example be an ethylene vinyl alcohol (EVOH) layer or an aluminum foil. In case of a sandwich structure, the amount of PE in each PE sub-layer is typically 10-30 g/m², such as 10-25 g/m²

The PE discussed above is preferably low density polyethylene (LDPE).

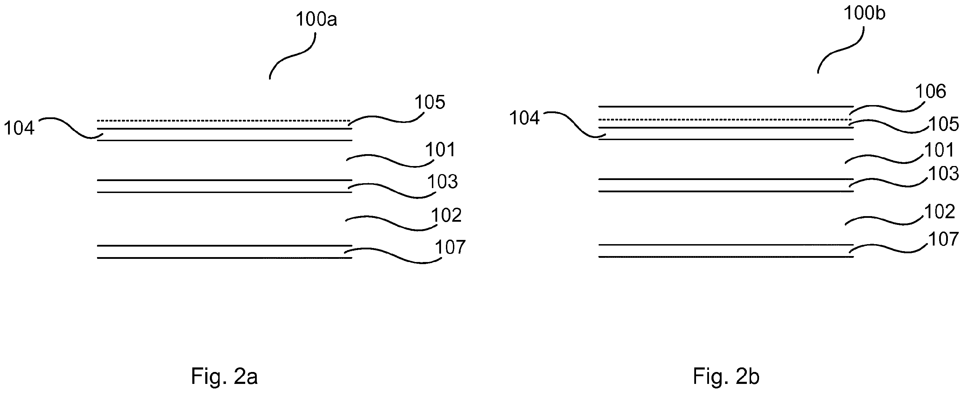

An embodiment of laminate according to the present disclosure is shown in Fig 2b.

There is further provided a use of a laminate according to the present disclosure in a method comprising: forming a sheet of the laminate into a tube in which ends of the sheet overlap; sealing the overlapping ends by welding, preferably ultrasonic welding; closing one end of the tube to obtain a substrate having a tubular portion and an end portion; and stretching at least part of the laminate forming the tubular portion by blow molding. The method may further comprise the step of embossing the sheet before it is formed into a tube.

The closing of one end of the tube typically comprises sealing by welding followed by folding to form a bottom.

In the machine described in EP2942188, the bottom of the container is normally folded to form a rectangular bottom portion.

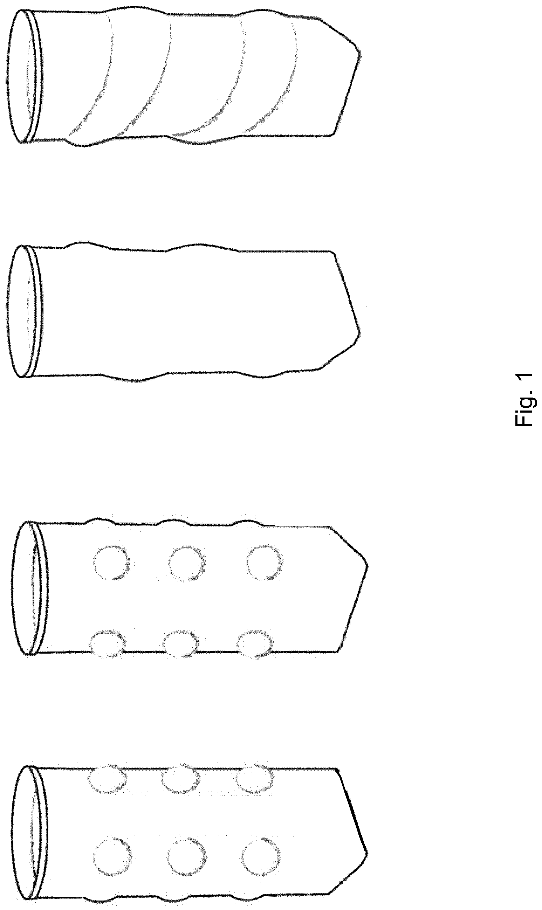

Accordingly, there is also provided a container having a rectangular end portion that is closed, a round end portion and a tubular portion provided between the rectangular end portion and the round end portion, wherein the rectangular end portion and the tubular portion are formed from a laminate according to the present disclosure and wherein at least part of the laminate of the tubular portion has been stretched to form a protruding pattern. Examples of such a container are seen in figure 1.

### EXAMPLES

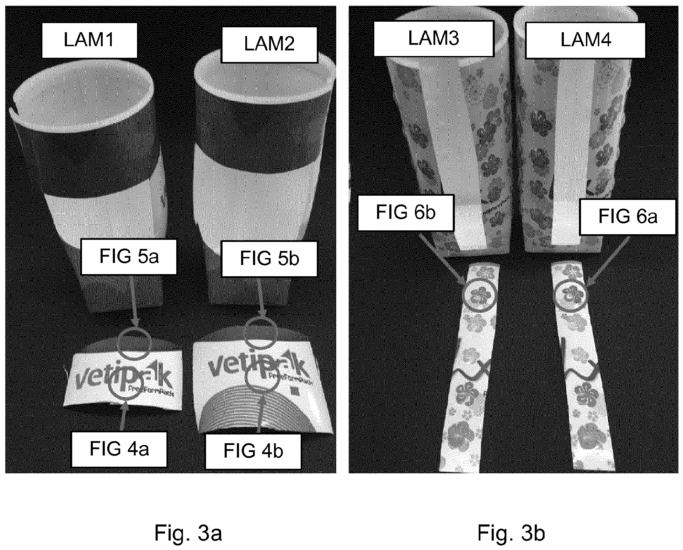

Two laminates according to the present disclosure (LAM2 and LAM3) and two reference laminates (LAM1 and LAM4) were prepared. LAM3 and LAM4 were not produced by the same lamination company as LAM1 and LAM2 and another type of LDPE was used for LAM3 and LAM4 than for LAM1 and LAM2. The laminates were formed into two different containers according to the method outlined in the Background section above. The formation of the first container (shown in figure 3a), for which LAM1 and LAM2 were used, involved blow molding (macro-shaping), but not embossing (micro-shaping). The formation of the second container (shown in figure 3b), for which LAM3 and LAM4 were used, involved embossing (micro-shaping), but not blow-molding (macro-shaping).

The structure of the reference laminates (LAM1 and LAM4) is illustrated in figure 2a as 100a. Each of the reference laminates thus comprised:
- a first paper layer (101) consisting of 100 g/m² FibreForm® (BillerudKorsnäs, Sweden);
- a second paper layer (102) consisting of 150 g/m² FibreForm® (BillerudKorsnäs, Sweden);
- an adhesive consisting of 30 g/m² LDPE provided between the bottom side of the first paper layer (101) and the top side of the second paper layer (102);
- a pigment layer (104) coated on the top side of the first paper layer (101), which pigment layer (104) had a top sub-layer and a bottom sub-layer (as specified below), the coat weight of the pigment layer was 20 g/m²;
- a print layer (105) provided on the pigment layer (104); and
- a bottom layer (107) of 40 g/m² PE provided on the bottom side of the second paper layer (102).

| Pigment layer | |
|---|---|
| Top sub-layer | Bottom sub-layer |
| Hydrocarb 95 (Omya) (calcium carbonate pigment, *d₅₀* = 0.70 µm): 100 parts (dry weight) | Hydrocarb 60 (Omya) (calcium carbonate pigment, *d₅₀* = 1.4 µm): 100 parts (dry weight) |
| Litex 6115 (Synthomer) (styrene-butadiene copolymer, Tg = 8 °C): 15 parts (dry weight) | Litex 6115 (Synthomer) (styrene-butadiene copolymer, Tg = 8 °C): 15 parts (dry weight) |
| Rheocoat 35 (Coatex) (alkali swellable rheology modifier): 0.15 parts (dry weight) | Rheocoat 35 (Coatex) (alkali swellable rheology modifier): 0.20 parts (dry weight) |
| Irgalite (BASF) (organic pigment): < 0.00 parts (dry weight) | Irgalite (BASF) (organic pigment): < 0.00 parts (dry weight) |
| NaOH: 0.07 parts (dry weight) | NaOH: 0.07 parts (dry weight) |

The structure of the laminates according to the present disclosure (LAM2 and LAM3), which is illustrated in figure 2b as 100b, differed from the structure of the reference laminate only in the provision of a top layer (106) of 18 g/m² PE provided on the print layer (105).

Samples were taken from the walls of the formed containers and analyzed by microscopy (see figure 3).

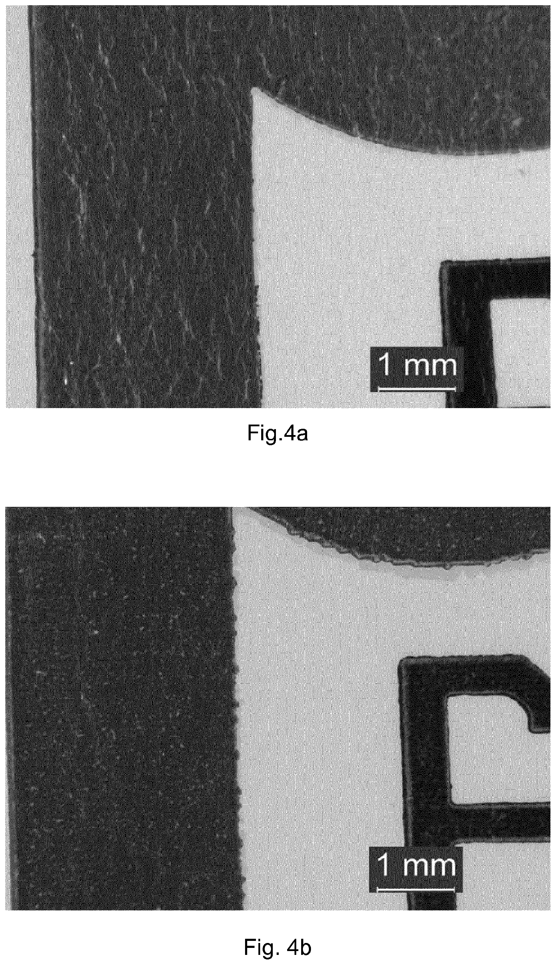

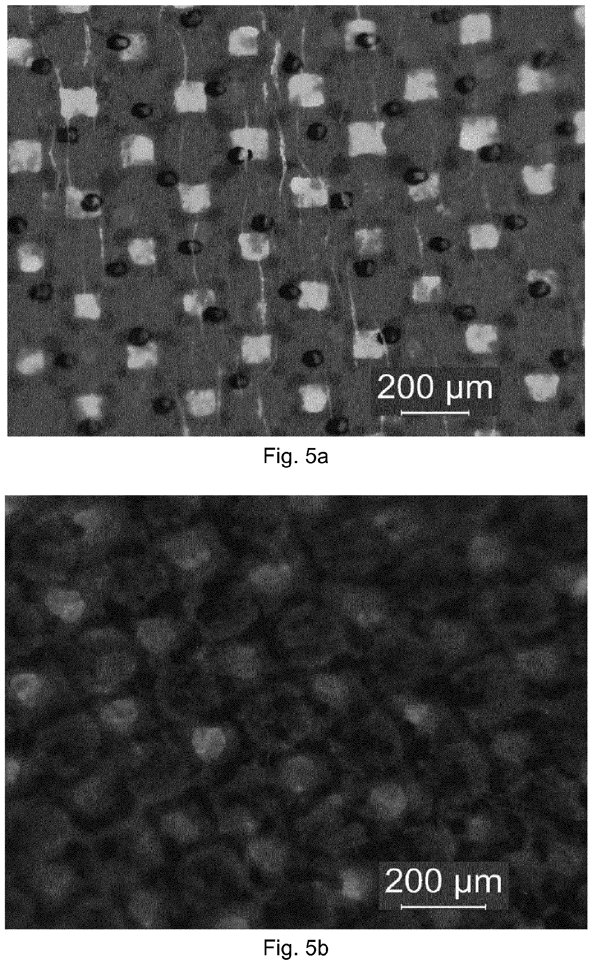

Figures 4a and 5a show substantial cracking in LAM1 during macro-shaping. Figures 4b and 5b show that the degree of cracking was significantly reduced when LAM2 (which has a top layer of PE) was used instead.

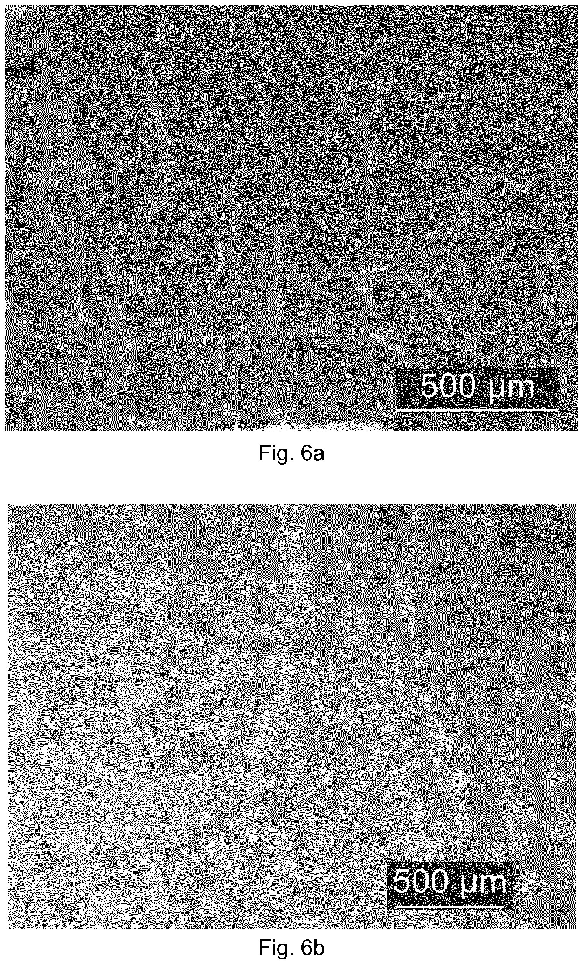

Figure 6a shows substantial cracking in LAM4 during micro-shaping. Figures 6b show that the degree of cracking was significantly reduced when LAM3 (which has a top layer of PE) was used instead.

It is thus concluded that for embossing (micro-shaping) as well as blow molding (macro-shaping), the problem of formation of cracks in a print layer on a pigment layer having a styrene-butadiene copolymer binder was solved by adding a top layer of PE. The problem was solved independent of which lamination company or PE type that was used.

## Claims

1. A laminate comprising a first paper layer having a top side and a bottom side and a second paper layer having a top side and a bottom side, wherein:
- the stretchability according to ISO 1924-3 of the first and the second paper layer is at least 6 % in both the machine direction (MD) and the cross direction (CD);
- an adhesive is provided between the bottom side of the first paper layer and the top side of the second paper layer;
- a pigment layer comprising CaCO₃ pigment and a styrene-butadiene copolymer binder is coated on the top side of the first paper layer;
- a print layer is provided on the pigment layer;
- a top layer comprising 8-30 g/m² polyethylene (PE) is provided on the print layer; and
- a bottom layer comprising 15-80 g/m² PE is provided on the bottom side of the second paper layer.

2. The laminate of claim 1, wherein the PE is low density polyethylene (LDPE).

3. The laminate of claim 1 or 2, wherein the top layer comprises 12-25 g/m², such as 13-20 g/m², PE.

4. The laminate of any one of the preceding claims, wherein the grammage according to ISO 536 of the first paper layer is 50-250 g/m², preferably 70-200 g/m², more preferably 80-160 g/m², most preferably 80-120 g/m².

5. The laminate of any one of the preceding claims, wherein the grammage according to ISO 536 of the second paper layer is 50-250 g/m², preferably 80-210 g/m², more preferably 90-200 g/m², most preferably 120-170 g/m².

6. The laminate of any one of the preceding claims, wherein the coat weight of the pigment layer is 8-35 g/m², preferably 10-30 g/m², more preferably 12-28 g/m², most preferably 14-25 g/m².

7. The laminate of any one of the preceding claims, wherein the stretchability according to ISO 1924-3 of the first and the second stretchable paper layer is at least 7 % in both the machine direction (MD) and the cross direction (CD).

8. The laminate of any one of the preceding claims, wherein the pigment layer comprises calcium carbonate having a weight median particle size *d*₅₀ of less than 1.0 µm, such as less than 0.8 µm, wherein the *d*₅₀ value is determined using a SediGraph 5100 or 5120 device from the company Micromeritics, USA.

9. The laminate of any one of the preceding claims, wherein the pigment layer comprises a bottom sub-layer contacting the top side of the first paper layer and a top sub-layer on which the printing layer is provided and wherein the top sub-layer comprises calcium carbonate having a weight median particle size *d₅₀* of less than 1.0 µm, such as less than 0.8 µm, wherein the *d*₅₀ value is determined using a SediGraph 5100 or 5120 device from the company Micromeritics, USA.

10. The laminate of claim 9, wherein the bottom sub-layer comprises calcium carbonate having a weight median particle size *d₅₀* of at least 1.0 µm, such as at least 1.2 µm, wherein the *d*₅₀ value is determined using a SediGraph 5100 or 5120 device from the company Micromeritics, USA.

11. The laminate of any one of the preceding claims, wherein the dry weight ratio of binder to pigment in the pigment layer is between 10:100 and 17:100, such as between 13:100 and 17:100.

12. The laminate of any one of the preceding claims, wherein the adhesive is 10-40 g/m², such as 10-35 g/m², such as 15-35 g/m², of PE.

13. A method comprising forming a sheet of the laminate according to any one of the preceding claims into a tube in which ends of the sheet overlap, sealing the overlapping ends by welding, closing one end of the tube to obtain a substrate having a tubular portion and an end portion and stretching at least part of the laminate forming the tubular portion by blow molding.

14. A container having a rectangular end portion that is closed, a round end portion and a tubular portion provided between the rectangular end portion and the round end portion, wherein the rectangular end portion and the tubular portion are formed from the laminate of any one of claims 1-12 and wherein at least part of the laminate of the tubular portion has been stretched to form a protruding pattern.

## Patentansprüche

1. Laminat, umfassend eine erste Papierschicht mit einer Oberseite und einer Unterseite und eine zweite Papierschicht mit einer Oberseite und einer Unterseite, wobei:
- die Dehnbarkeit der ersten und der zweiten Papierschicht gemäß ISO 1924-3 sowohl in Maschinenrichtung (MD) als auch in Querrichtung (CD) mindestens 6 % beträgt;
- ein Klebstoff zwischen der Unterseite der ersten Papierschicht und der Oberseite der zweiten Papierschicht vorgesehen ist;
- eine Pigmentschicht, die CaCO₃-Pigment enthält, und ein Styrol-Butadien-Copolymerbindemittel auf die Oberseite der ersten Papierschicht aufgetragen wird;
- auf der Pigmentschicht eine Druckschicht vorgesehen ist;
- eine obere Schicht, umfassend 8-30 g/m² Polyethylen (PE) auf der Druckschicht vorgesehen ist; und
- eine untere Schicht, umfassend 15-80 g/m² PE, auf der Unterseite der zweiten Papierschicht vorgesehen ist.

2. Laminat nach Anspruch 1, wobei das PE Polyethylen niedriger Dichte (LDPE) ist.

3. Laminat nach Anspruch 1 oder 2, wobei die Deckschicht 12-25 g/m², wie etwa 13-20 g/m², PE ist umfasst.

4. Laminat nach einem der vorhergehenden Ansprüche, wobei das Flächengewicht gemäß ISO 536 der ersten Papierschicht 50-250 g/m², vorzugsweise 70-200 g/m², bevorzugter 80-160 g/m², am meisten bevorzugt 80-120 g/m² beträgt.

5. Laminat nach einem der vorhergehenden Ansprüche, wobei das Flächengewicht gemäß ISO 536 der zweiten Papierschicht 50-250 g/m², vorzugsweise 80-210 g/m², bevorzugter 90-200 g/m², am meisten bevorzugt 120-170 g/m² beträgt.

6. Laminat nach einem der vorhergehenden Ansprüche, wobei das Strichgewicht der Pigmentschicht 8-35 g/m², vorzugsweise 10-30 g/m², bevorzugter 12-28 g/m², am meisten bevorzugt 14-25 g/m² beträgt.

7. Laminat nach einem der vorhergehenden Ansprüche, wobei die Dehnbarkeit der ersten und der zweiten dehnbaren Papierschicht gemäß ISO 1924-3 sowohl in Maschinenrichtung (MD) als auch in Querrichtung (CD) mindestens 7 % beträgt.

8. Laminat nach einem der vorhergehenden Ansprüche, wobei die Pigmentschicht Calciumcarbonat mit einer gewichtsmittleren Teilchengröße *d₅₀* von weniger als 1,0 µm, wie etwa weniger als 0,8 µm, umfasst, wobei der *d₅₀*-Wert unter Verwendung eines Geräts SediGraph 5100 oder 5120 der Firma Micromeritics, USA, ermittelt wird.

9. Laminat nach einem der vorhergehenden Ansprüche, wobei die Pigmentschicht eine untere Unterschicht umfasst, die mit der Oberseite der ersten Papierschicht in Kontakt ist, und eine obere Unterschicht, auf der die Druckschicht vorgesehen ist, und wobei die obere Unterschicht Calciumcarbonat mit einer gewichtsmittleren Teilchengröße *d₅₀* von weniger als 1,0 µm, wie etwa weniger als 0,8 µm, umfasst, wobei der *d₅₀*-Wert unter Verwendung eines Geräts SediGraph 5100 oder 5120 der Firma Micromeritics, USA, ermittelt wird.

10. Laminat nach Anspruch 9, wobei die untere Unterschicht Calciumcarbonat mit einer gewichtsmittleren Teilchengröße *d₅₀* von mindestens 1,0 µm, wie etwa mindestens 1,2 µm, umfasst, wobei der *d₅₀*-Wert unter Verwendung eines Geräts SediGraph 5100 oder 5120 der Firma Micromeritics, USA, ermittelt wird.

11. Laminat nach einem der vorhergehenden Ansprüche, wobei das Trockengewichtsverhältnis von Bindemittel zu Pigment in der Pigmentschicht zwischen 10:100 und 17:100, wie etwa zwischen 13:100 und 17:100 liegt.

12. Laminat nach einem der vorhergehenden Ansprüche, wobei der Klebstoff 10-40 g/m², wie etwa 10-35 g/m², wie etwa 15-35 g/m², PE ist.

13. Verfahren, umfassend das Bilden eines Rohrs aus einer Folie aus dem Laminat nach einem der vorhergehenden Ansprüche, wobei sich die Enden der Folie überlappen, das Verschließen der überlappenden Enden durch Schweißen, das Schließen eines Endes des Rohrs, um ein Substrat mit einem rohrförmigen Abschnitt und einen Endabschnitt zu erhalten und mindestens teilweises Dehnen des Laminats, das den rohrförmigen Abschnitt bildet, durch Blasformen.

14. Behälter mit einem rechteckigen Endabschnitt, der geschlossen ist, einem runden Endabschnitt und einem röhrenförmigen Abschnitt, der zwischen dem rechteckigen Endabschnitt und dem runden Endabschnitt vorgesehen ist, wobei der rechteckige Endabschnitt und der röhrenförmige Abschnitt aus dem Laminat nach einem der Ansprüche 1 bis 12 gebildet sind, und wobei mindestens ein Teil des Laminats des röhrenförmigen Abschnitts gedehnt wurde, um ein hervorstehendes Muster zu bilden.

## Revendications

1. Stratifié comprenant une première couche de papier ayant un côté supérieur et un côté inférieur et une seconde couche de papier ayant un côté supérieur et un côté inférieur, dans lequel :
- l'aptitude à l'étirage selon la norme ISO 1924-3 de la première et de la seconde couche de papier est d'au moins 6 % à la fois dans le sens machine (SM) et dans le sens travers (ST) ;
- un adhésif est fourni entre le côté inférieur de la première couche de papier et le côté supérieur de la seconde couche de papier ;
- une couche de pigment comprenant un pigment de CaCO₃ et un liant de copolymère de styrène-butadiène est enduite sur le côté supérieur de la première couche de papier ;
- une couche d'impression est fournie sur la couche de pigment ;
- une couche supérieure comprenant de 8 à 30 g/m² de polyéthylène (PE) est fournie sur la couche d'impression ; et
- une couche inférieure comprenant de 15 à 80 g/m² de PE est fournie sur le côté inférieur de la seconde couche de papier.

2. Stratifié selon la revendication 1, dans lequel le PE est un polyéthylène basse densité (LDPE).

3. Stratifié selon la revendication 1 ou 2, dans lequel la couche supérieure comprend de 12 à 25 g/m², tel que de 13 à 20 g/m² de PE.

4. Stratifié selon l'une quelconque des revendications précédentes, dans lequel le grammage selon la norme ISO 536 de la première couche de papier est de 50 à 250 g/m², de préférence de 70 à 200 g/m², plus préférablement de 80 à 160 g/m², de manière préférée entre toutes de 80 à 120 g/m².

5. Stratifié selon l'une quelconque des revendications précédentes, dans lequel le grammage selon la norme ISO 536 de la seconde couche de papier est de 50 à 250 g/m², de préférence de 80 à 210 g/m², plus préférablement de 90 à 200 g/m², de manière préférée entre toutes de 120 à 170 g/m².

6. Stratifié selon l'une quelconque des revendications précédentes, dans lequel le poids du revêtement de la couche de pigment est de 8 à 35 g/m², de préférence de 10 à 30 g/m², plus préférablement de 12 à 28 g/m², de manière préférée entre toutes de 14 à 25 g/m².

7. Stratifié selon l'une quelconque des revendications précédentes, dans lequel l'aptitude à l'étirage selon la norme ISO 1924-3 de la première et de la seconde couche de papier étirable est d'au moins 7 % à la fois dans le sens machine (SM) et dans le sens travers (ST).

8. Stratifié selon l'une quelconque des revendications précédentes, dans lequel la couche de pigment comprend du carbonate de calcium ayant une taille de particule médiane en poids *d₅₀* inférieure à 1,0 µm, telle qu'inférieure à 0,8 µm, dans lequel la valeur *d₅₀* est déterminée en utilisant un dispositif SediGraph 5100 ou 5120 de la société Micromeritics, USA.

9. Stratifié selon l'une quelconque des revendications précédentes, dans lequel la couche de pigment comprend une sous-couche inférieure en contact avec le côté supérieure de la première couche de papier et une sous-couche supérieure sur laquelle la couche d'impression est fournie et dans lequel la sous-couche supérieure comprend du carbonate de calcium ayant une taille de particule médiane en poids *d₅₀* inférieure à 1,0 µm, telle qu'inférieure à 0,8 µm, dans lequel la valeur *d₅₀* est déterminée en utilisant un dispositif SediGraph 5100 ou 5120 de la société Micromeritics, USA.

10. Stratifié selon la revendication 9, dans lequel la sous-couche inférieure comprenant du carbonate de calcium ayant une taille de particule médiane en poids *d₅₀* d'au moins 1,0 µm, telle que d'au moins 1,2 µm, dans lequel la valeur *d₅₀* est déterminée en utilisant un dispositif SediGraph 5100 ou 5120 de la société Micromeritics, USA.

11. Stratifié selon l'une quelconque des revendications précédentes, dans lequel le rapport en poids sec du liant au pigment dans la couche de pigment est compris entre 10:100 et 17:100, tel qu'entre 13:100 et 17:100.

12. Stratifié selon l'une quelconque des revendications précédentes, dans lequel l'adhésif est de 10 à 40 g/m², tel que de 10 à 35 g/m², tel que de 15 à 35 g/m², de PE.

13. Procédé comprenant la formation d'une feuille du stratifié selon l'une quelconque des revendications précédentes en un tube dans lequel les extrémités de la feuille se superposent, le scellement des extrémités se superposant par soudure, la fermeture d'une extrémité du tube pour obtenir un substrat ayant une partie tubulaire et une partie d'extrémité et l'étirement d'au moins une partie du stratifié formant la partie tubulaire par moulage par soufflage.

14. Contenant ayant une partie d'extrémité rectangulaire qui est fermée, une partie d'extrémité arrondie et une partie tubulaire fournie entre la partie d'extrémité rectangulaire et la partie d'extrémité arrondie, dans lequel la partie d'extrémité rectangulaire et la partie tubulaire sont formées à partie du stratifié selon l'une quelconque des revendications 1 à 12 et dans lequel au moins une partie du stratifié de la partie tubulaire a été étirée pour former un motif en relief.
